# EUROPEAN PATENT SPECIFICATION

(11) **EP 1 757 561 B1**
(45) Date of publication and mention of the grant of the patent: **14.03.2012**
(21) Application number: 06254210.5
(22) Date of filing: 10.08.2006
(51) Int. Cl.: C02F 3/12, B01D 24/36

(54) **Pond filters**
Teichfilter
Filtres à bassin

(30) Priority: 23.08.2005 GB 0517257
(43) Date of publication of application: 28.02.2007
(73) Proprietor: Hozelock Limited, Aylesbury, Buckinghamshire HP19 8SU (GB)
(72) Inventor: Riches, Sean, Luton, Bedfordshire LU4 0PE (GB)
(74) Representative: Faulkner, Thomas John

(56) References cited:
- EP-A- 0 486 748
- EP-A- 0 958 850
- DE-C1- 4 235 330
- US-A- 5 705 057
- US-A1- 2004 238 433

## Description

This invention relates to pond filters.

There are various types of pond filter and this specification is particularly relevant to filters which are some times known as tank filters which are generally used for filtering water in larger domestic ponds.

Existing pond filters have various limitations and draw backs. An object of the present invention is to provide pond filters which alleviate at least some of the problems associated with prior art pond filters.

DE 42 35 330 discloses an assembly to clean water, for example in an aquarium. The assembly has a mechanical stage for separating solid materials in the water followed by a biological cleaning stage.

According to the present invention there is provided a pond filter assembly according to claim 1.

Different possible types of filtering elements include mechanical filtering elements; biological filter media elements, which may be static media elements or moveable media elements; UV filtering equipment. Each compartment may house or be arranged to house one of or a combination of such filtering elements.

Another of the compartments may house/may be arranged to receive static media which can form part of a biological filter.

The compartment housing moveable media may have a water holding portion. The water holding portion may have a first volume and the total volume of the compartment occupied by the moveable media may be a second volume. The second volume is preferably smaller than the first volume.

The compartment housing/arranged to receive moveable media may be arranged to promote circulation of the media within the compartment.

One compartment, for example the compartment housing/arranged to receive moveable media, may be separated from another compartment by a wall portion. Part of the wall portion may be solid. Another part of the wall portion may be perforated to allow flow of water from one compartment to the other.

Part of the wall portion may be moulded as part of a main body of the container. Part of the wall portion may be distinct from a main body of the container. Preferably the distinct part is perforated to provide water flow paths. The distinct part may be arranged to clip or snap into position on the main body of the container.

A hinged compartment boundary part may be provided having two portions joined via a hinge. The hinged part is typically distinct from the main body of the container. The hinge is typically a plastic hinge. A first of the two portions may be arranged to act as at least part of a wall separating one compartment from another. The second portion may be arranged as a cover for one of the compartments. Where the hinged part is installed in the region of a compartment housing/arranged to receive moveable media the hinged part may serve to retain the moveable media against leaving that compartment. The provision of a hinged part can help simplify manufacture and save cost.

The inlet into the container may be arranged for feeding water into the container tangentially relative to the container wall in the region of the inlet. This can help encourage circulation within the container. Preferably the inlet is provided into a compartment housing/arranged to receive moveable media.

At least one air introduction venturi may be provided at the inlet into the container. The venturi may be arranged so that an axis of the venturi is generally tangentially to the side wall of the container in the region of the venturi. Preferably the venturi is disposed so that an outlet of the venturi feeds into a compartment housing/arranged to receive moveable media.

Arranging the venturi so that the outlet from the venturi feeds a region of the filter containing moveable media is advantageous as this can maximise the oxygen available to bacteria growing on the moveable media. As is understood, bacteria on moveable media which form part of a moving bed biological filter tend to grow aggressively and demand high levels of oxygen.

The outlet from the container may have a relatively large overall diameter. The overall diameter of the outlet may be large enough that filter media housed by the container could pass through the outlet. The outlet may be provided with a guard to obstruct the passage of filter media from the container. The guard may comprise cross members which are integral with a main body of the container. The guard may be formed by virtue of the outlet being created by cutting out a plurality of selected portions of a side wall of the container, leaving cross members between the cut outs. The size of the cut outs may be chosen to be a such that filter media housed in the container in the region of the outlet cannot pass through the outlet.

The outlet may be provided in a compartment housing/arranged to receive static filter media elements. The guard may be arranged to prevent the filter media elements from leaving the compartment via the outlet.

The filter may be arranged to support at least one elongate mechanical filter element such as a piece of foam. The filter may comprise at least one mechanical filter element support onto which an elongate mechanical filter element may be mounted. The filter element support may comprise at least one water flow channel. The water flow channel may be arranged to receive water which has passed through a carried filter element and feed this towards an outlet of that part of the filter. The filter element support may comprise a perforated hollow tube. In such a case the water flow channel is provided by the hollow passage through the tube and the perforations allow access into the channel. Preferably the filter element support comprises an extrusion. Preferably the filter element support comprises at least one exposed water flow channel. Such an exposed water flow channel may be in the form of a groove in an outer surface of the support. Preferably the support comprises an extrusion which defines a plurality of exposed grooves.

The filter may be provided with a cleaning kit which comprises at least one sleeve which is arranged to be located over one of the element supports during cleaning. The sleeve may be arranged to fit between the support and a supported filter element and further arranged to at least partially obstruct access to the water flow channel from the supported filter element. With such a sleeve in position the filter element, for example piece of foam may be squeezed to drive out debris without this debris exiting that portion of the filter via the water flow channel. The cleaning kit may comprise a plunger which is arranged for squeezing a filter element carried on the support. The plunger may comprise a tube portion arranged to receive the sleeve and a plate portion for acting on a filter element.

The container may comprise at least one drain outlet. The drain outlet may be used when cleaning the filter - or "desludging". Where there are a plurality of compartments each compartment which does not comprise the main outlet may be provided with a respective drain outlet. In at least some circumstances the main outlet may be used as drain outlet, which relieves the need for a specific drain outlet in a compartment that comprises the main outlet. However, a drain outlet may be provided in addition to the main outlet in a respective compartment if that is desired.

At least some of the compartments may comprise a floor portion. The floor portion may define one boundary of the compartment. The floor portion may be spaced from a base of the container. The floor portion of one compartment may act as a cover portion of another compartment. The floor portion of one compartment may separate that compartment from another compartment. The drain outlet of a compartment may be disposed in the sidewall of the container a position towards the level at which the floor portion is disposed. The floor portion may be arranged to encourage contents of the respective compartment to flow towards and out of the respective drain outlet when the drain outlet is open. The floor portion may be arranged so that when the filter is in its operative position, the upper surface of the floor portion slopes down towards the respective drain outlet. The upper surface of the floor portion may comprise channels for guiding flow towards the drain outlet.

The floor portion may be arranged to provide a substantial seal against water flow from one compartment to another. In alternatives the floor portion may provide an obstruction to sludge and/or media elements leaving the compartment, but not provide a water seal.

Embodiments of the present invention will now be described, by way of example only, with reference to the accompanying drawings in which:
Figure 1 schematically shows a pond filter.
Figure 2 shows the pond filter shown in Figure 1, with part of an outer container cut away to show the interior of the filter, Figure 2 also shows a plurality of different types of filtering elements disposed within the filter and thus Figure 2 also shows a pond filter assembly embodying the present invention;
Figure 3 schematically shows a main body portion of the filter shown in Figures 1 and 2;
Figure 4 is a plan view of part of the main body portion shown in Figure 3;
Figure 5 shows an inlet manifold which is mounted to the main body portion shown in Figure 3 in the assembled filter as shown in Figures 1 and 2;
Figure 6 shows detail of an outlet from the filter shown in Figures 1 and 2;
Figure 7 shows a floor portion of a compartment defined within the filter shown in Figures 1 and 2;
Figure 8 shows a hinged boundary component in its unassembled state which is provided in an assembled state in the filter shown in Figures 1 and 2;
Figure 9 shows a mechanical filter element support which is provided in the filter shown in Figures 1 and 2;
Figure 10 shows a sleeve which may be used in cleaning mechanical filter elements which are used in conjunction with the filter shown in Figures 1 and 2;
Figure 11 shows a side view of a plunger which may be used in cleaning mechanical filter elements used in conjunction with the filter shown in Figures 1 and 2; and
Figure 12 shows a section of the plunger shown in Figure 1 on line XII - XII.

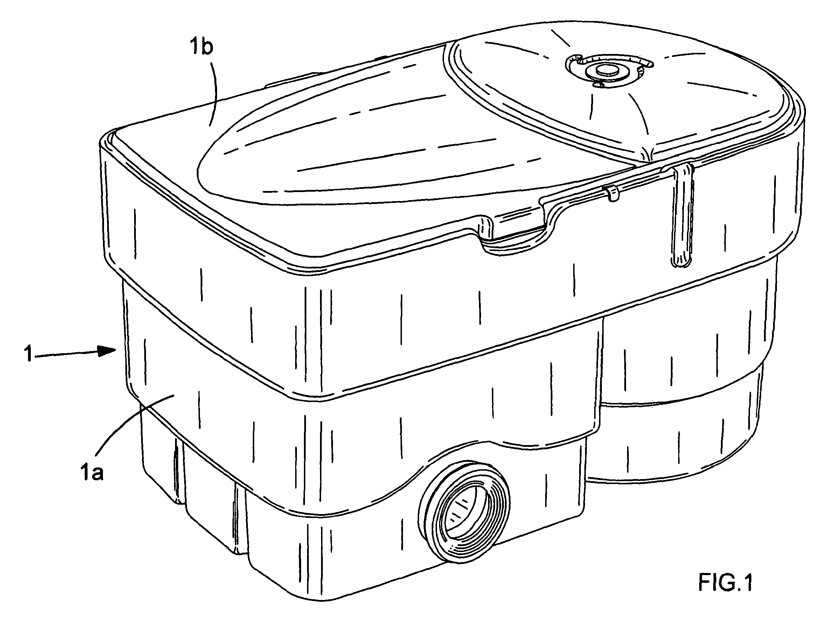

Figure 1 shows a pond filter in the form of a tank filter which embodies the present invention. This filter is a domestic pond filter for filtering water of, for example, a domestic fish pond. The pond filter comprises a container 1 which itself comprises a main body portion 1a and a lid portion 1b. The container 1 is arranged for housing filtering elements. In the present embodiment the filter is arranged for housing a plurality of different types of filtering element, each type of filtering element being housed in a different respective compartment.

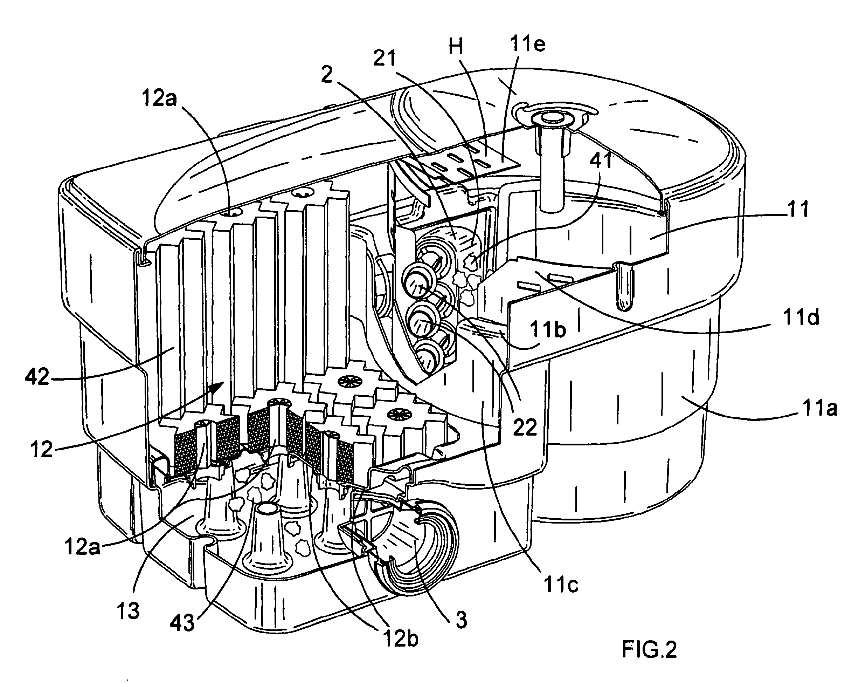

Referring now to Figure 2, the container 1 of the filter comprises an inlet arrangement 2 for allowing water to be fed into the container 1 for filtering and an outlet 3 for allowing filtered water to leave the container 1. The space within the container 1 is divided into a plurality of compartments 11, 12, 13. However, it will be noted that these first, second and third compartments 11, 12 and 13 are all disposed within the same container 1 and moreover are all respective parts of the space within the main body portion 1a of the container 1. Thus all of these compartments are disposed within a single vessel. This removes the need for there to be separate units provided with connections therebetween as would be the case if separate filtering areas were provided in a more conventional way by providing separate vessels.

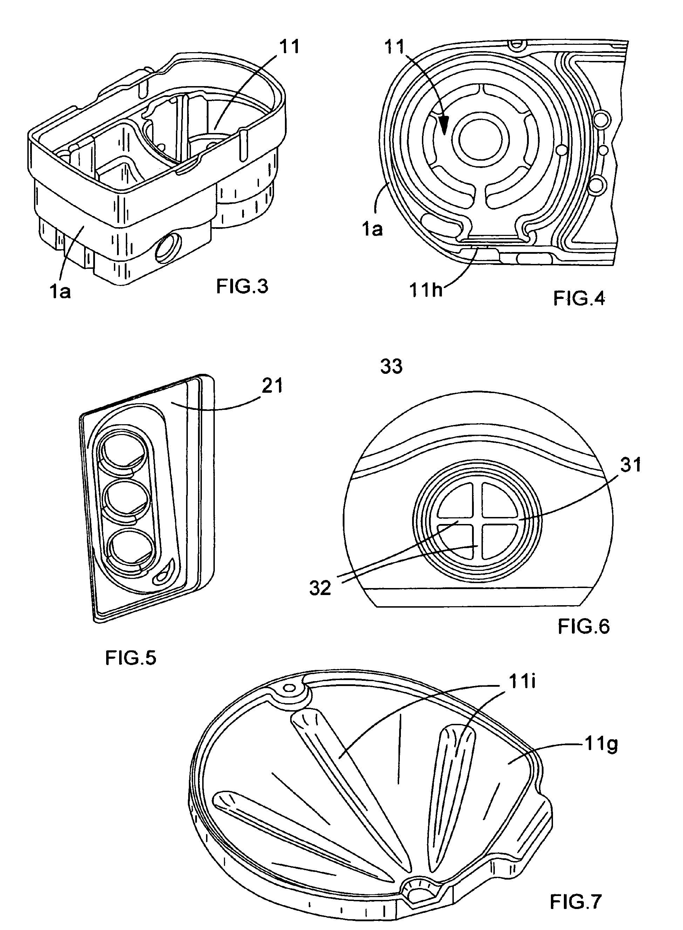

The first of the compartments 11 comprises the inlet arrangement 2 and thus is arranged to receive water which is fed into the filter. In the present embodiment the inlet arrangement 2 comprises a manifold 21 which can be seen in Figure 2 and which is shown in isolation in Figure 5. The manifold 21 is arranged to provide three inlet streams of water into the container 1. Each of these streams is fed through a respective aeration venturi 22 (these can be seen in Figure 2). Each venturi 22 is arranged to introduce air and hence oxygen into the water flowing into the filter. An air supply pipe (not shown) is connected to each venturi 22 to provide a supply of air to the venturi which can be sucked into and entrained into the water flow due to the reduction in pressure in the narrow portion of the venturi as water flows through it into the filter.

The inlet arrangement 2, and in particular, the venturi 22 are orientated so that the water flow into the first compartment 11 of the filter is generally tangential to the side wall of that compartment in the region of the venturi 22. It will be noted that the venturi 22 are arranged in line with one another and each positioned at the same angle relative to the side wall of the compartment 11 in which they are disposed. The venturi 22 are arranged one above another so that they are also spaced the same distance from the side wall of the first compartment 11. These different elements of the arrangement and geometry of the venturi and compartment in which they are disposed together help to ensure that circulation of the contents of the first compartment 11 is encouraged as water flows into the first compartment.

The first compartment 11 is arranged to house movable media elements 41 schematically shown in Figure 2. These movable media elements 41 are commonly known as movable biomedia and are arranged to float in water provided in the first compartment 11 when the filter is in operation so as to provide what is known as a moving bed biological filter.

The first compartment 11 has a water holding portion 11a which can be basically considered to be the bottom part of the compartment 11. The upper edge of the water holding portion 11 a is defined by a weir 11b formed at the top of a side wall portion 11c (part of which is cutaway in the drawing) which exists between the first compartment 11 and the second compartment 12.

When the filter is in use, the water holding portion 11a of the first compartment 11 will fill with water until this weir 11b is reached. At this point water can flood over the weir 11b into the second compartment 12. The movable biomedia 41 are arranged to float freely in the water provided in the water holding portion 11 a and also are provided in an amount such that the total volume occupied by the biomedia in the water holding portion 11a if there is no water present is significantly less than the overall volume defined by the water holding portion 11a. That is to say, when there is no water in the filter and if the correct number of moving biomedia 41 are provided in the water holding portion 11a with the filter in its normal operative position the biomedia 41 come to a level well below the weir 11b. This ensures that when there is water in the water holding portion 11a and circulation of the water is being caused by water coming into the first compartment 11 via the inlet arrangement 2, the movable biomedia 41 are free to circulate with the water. This allows the moving bed biological filter to function in the desired way. As will be appreciated by those skilled in the art, the movable biomedia 41 comprise plastic elements which have a large surface area for their size over which bacteria can grow. In the moving bed these media continually knock against one another which has the effect of knocking the bacteria off of the media which encourages regrowth of younger and hence more effective bacteria.

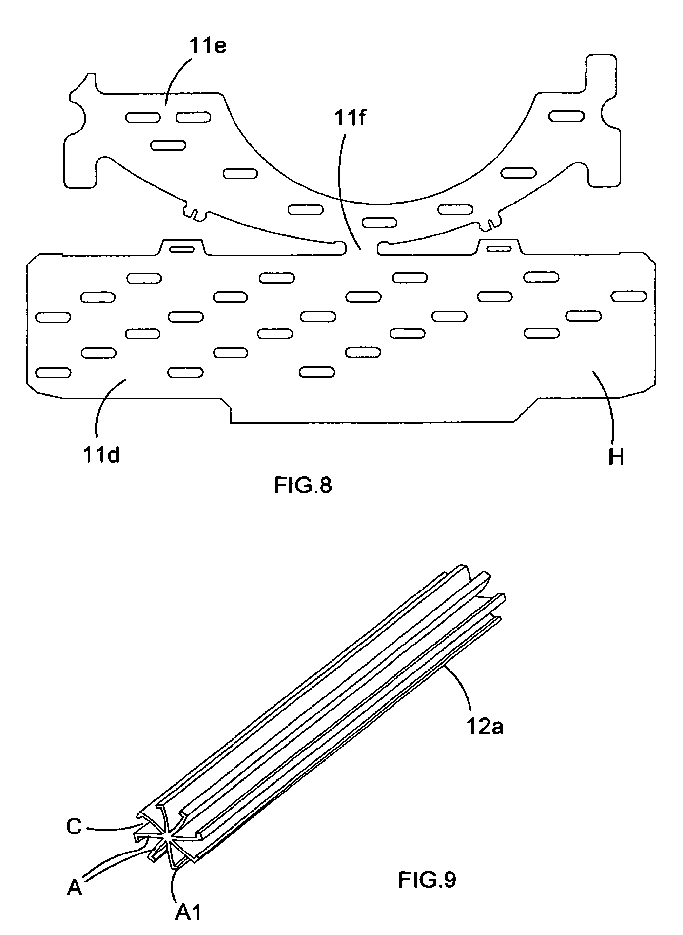

As well as the solid wall portion 11c which serves to separate the first compartment 11 from the second compartment 12, a perforated wall portion 11d is also provided between the first compartment 11 and the second compartment 12. This perforated wall portion 11d is arranged to retain the biomedia 41 in the first compartment, but allow water to flow from the first compartment 11 to the second compartment 12. The perforated wall portion 11d is part of a hinged compartment boundary part H which is shown in an unassembled state in Figure 8. Parts of, but not all of this hinged boundary part H may be seen in Figure 2. In particular as mentioned above, part of the perforated wall portion 11d may be seen in Figure 2 and part of a perforated cover portion 11e can be seen in Figure 2. The whole of the perforated wall portion 11d and perforated cover portion 11e can be seen in Figure 8. Those parts of the hinged compartment boundary part H which can be seen in Figure 2 are shown in their assembled configuration.

The hinged compartment boundary part H as a whole helps to ensure that the moveable biomedia 41 are retained within the first compartment 11. The perforated wall portion 11d is joined to the cover portion 11e by a plastic hinge 11f which allows those two parts to hinge relative to one another between the unassembled state shown in Figure 8 and the assembled state shown in Figure 2. When in the assembled state shown in Figure 2 the two parts are held in the flexed position by virtue of being clipped together and also clipping into the main body portion 1a of the filter.

The first compartment 11 also comprises a floor portion 11g which is shown in isolation in Figure 7. This floor portion 11g defines the lower surface of the first compartment 11. Figure 3 shows the main body portion 1a in an orientation where the location for the floor portion 11g can be seen and Figure 4 shows part of the main body portion 1a of the filter including the location for the floor portion 11g. However, in these views of the main body portion 1a, the floor portion 11g itself is not shown. The floor portion 11g is arranged to sit in this part of the main body portion and moreover it is arranged to sit in the main body spaced from and at an angle to the base of the main body portion 1a.

The main body portion comprises a drain outlet 11h from the first compartment which is at a level that corresponds to the level at which the floor portion 11g rests in the region of the drain outlet 11h. The main body portion 1a of the filter and the floor portion 11g are arranged so that when the floor portion 11g is positioned in the filter, it is inclined (as mentioned above) with its lowest point coinciding with the position of the drain outlet 11h. This can help encourage material to leave the first compartment 11 via the drain outlet 11h when this is opened. Further, the floor portion 11g is provided with a series of three channels 11i which further help to encourage the flow of material towards the drain outlet 11h. Figure 3 also shows the main body 1a of the filter and the location of the first compartment 11. The drain outlet 11h is useful when cleaning the first compartment. Water used in cleaning, water already in the filter and debris may be washed out of the drain outlet 11h. As will be clear, in normal use, the drain outlet is blocked off by a cap/plug (not shown).

Referring back now to Figure 2, the second compartment 12 is arranged to house mechanical filtering elements and such filtering elements in the form of shaped blocks of foam 42 are shown in situ in Figure 2 with some of these having been cut away. Each block of foam 42 is supported in the second compartment 12 by a respective support rod 12a. One of the support rods 12a is shown in isolation in Figure 9. Each support rod 12a comprises a plastics extrusion. Each of the support rods 12a is mounted into a floor portion 12b of the second compartment 12. Again this floor portion 12b is shown partly been cut away in the drawing. Each extrusion comprises a plurality of arms A, in this embodiment eight arms. Between each adjacent pair of arms A there is formed a respective water channel C and each of the arms A terminates in a lip portion A1 to better support the foam block 42 to be carried by the support rod 12a.

The support rods 12a are each mounted in the floor portion 12b in such a way that the way that the water channels C open out into the third compartment 13 which is disposed below the floor portion 12b of the second compartment 12. That is to say, each of the support rods 12a is mounted in or in register with an aperture provided in the floor portion 12b.

This arrangement means that water which flows into the foam blocks 42 may flow through the flow blocks 42 reaching the water channel C provided in the support extrusion 12a and from there flow down these channels C and into the third compartment 13.

In alternatives rather than the provision of extrusions of the type shown in Figure 9, the support rods can be in the form of hollow perforated tubes, i.e. tubes with perforations in their side walls. If this type of support rod is used the functioning of the device is much the same, but there is an increased risk of clogging of the perforations, there is an increased risk of snagging parts being generated in the production of these tubes which can catch and damage the foam and there is also a risk that the foam will be less than adequately supported such that it tends to squeeze into the perforations in the side walls of the tubes. Furthermore, the use of extrusions can help to reduce manufacturing costs.

The second compartment 12 is provided with a drain output (not shown) which is similar to that 11h provided for the first compartment 11. Moreover this drain outlet (not shown) for the second compartment is again provided at a level which is substantially the same as that of the respective floor portion 12b of the second compartment 12. Thus, again the drain outlet is spaced from the base of the main body portion 1a. Again the floor portion 12b comprises channels (not shown) which are arranged to encourage flow of material out of the drain outlet when this is open. The provision of such a drain outlet again aids in cleaning the second compartment and its contents in the same way as the drain outlet 11h in the first compartment can help when cleaning of the first compartment and its contents.

The third compartment 13 is defined between the floor portion 12b of the second compartment and the base of the main body 1a of the filter. It will be noted that the main body 1a of the filter can be considered to have two main chambers the first of which houses the first compartment 11 and the second which houses the second compartment 12 and the third compartment 13.

The third compartment 13 is arranged to be filled with non-moving biomedia elements 43 which are schematically shown in Figure 2. In this instance the biomedia elements 43 are used to fill substantially the whole of the third compartment 13 to discourage movement of the media. This encourages growth of different types of bacteria with different beneficial cleaning effects than occur in the moving bed filter in the first compartment 11. Also at this point in the filter, the flow should be such that there is less agitation effect of the media than is the case in the first compartment 11.

It will be noted that whilst the third compartment 13 is separated from the second compartment 12 via a component, i.e. the floor portion 12b, which is separate from the main body 1a of the container, the first compartment 11 is separated from the other two compartments 12, 13 by virtue of the wall portion 11c which is an integral part of the main body 1a of the container. Thus the present filter is arranged so that there is a plurality of compartments and at least one of these compartments is separated from at least one of the other compartments by virtue of a dividing portion which is integrally moulded with the main body of the container.

The outlet 3 from the container 1 is disposed in a position such that it acts as an outlet from the third compartment 13. Furthermore, the overall diameter of the outlet 3 is relatively large and in particular it is larger than the size of the biomedia 43 which are housed in the third compartment 13 during use. Therefore, as can be seen in Figures 2 and 6, the outlet 3 is provided with a guard 31 in the form, in this embodiment, of four cross members 32. These cross members 32 are in this embodiment integral with the material of the main body portion 1a, that is to say the material of the side wall of the relevant compartment 13. Thus, in manufacture what actually is done is that the main body portion 1a is moulded with in effect a blanking disc across the inner end of the outlet 3 and then cut outs 33 are created by cutting out the relevant parts of material so as to leave the cross members 32. The provision of a guard in this, way helps reduce manufacturing costs compared with the situation if a separate component is used as a guard.

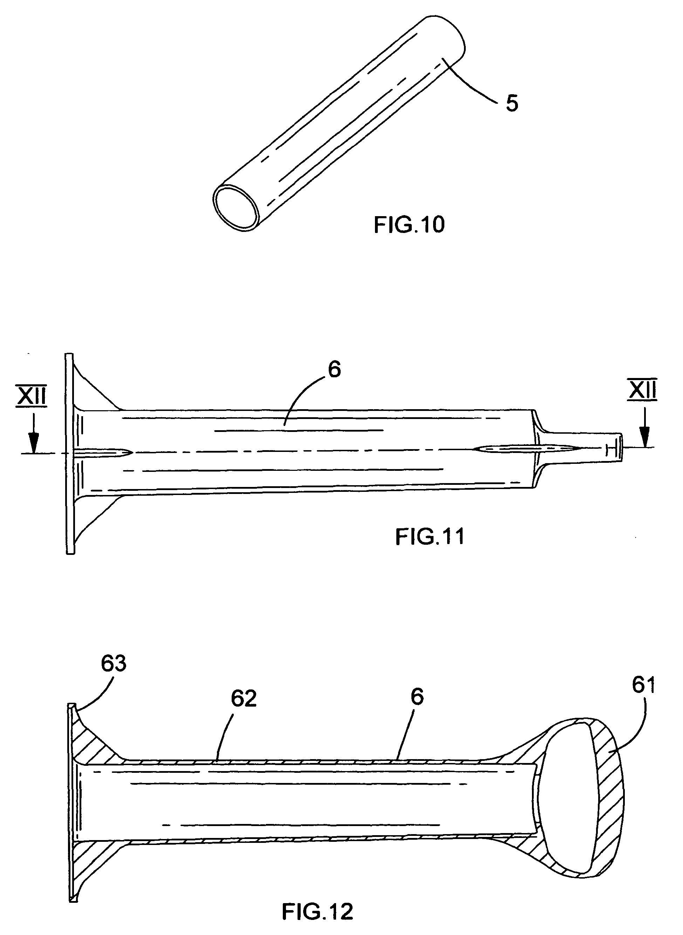

The filter may be provided with a cleaning kit. The cleaning kit comprises a sleeve 5 as shown in Figure 10 which is arranged to slide over one of the support rods 12a whilst the foam block 42 is in situ such that the sleeve 5 occupies a position between the foam block 42 and the support rod 12a. Once the sleeve 5 is in this position this effectively blanks off access to the water channels C provided in the support rod 12a such that water and/or other material/debris leaving the foam block cannot enter the water channels C. With the water channels C blocked off, the foam may then be cleaned, for example by washing and/or squeezing, without the debris from the foam passing into the water channels C and hence into the third compartment 13 of the filter and potentially into the pond.

The cleaning kit also comprises a plunger as shown in Figures 11 and 12. The plunger 6 comprises a handle 61, a tube portion 62 which is arranged to receive a support rod 12a surrounded by the sleeve 5 and a plate portion 53 which is arranged for squeezing a foam block carried by the support 12a/sleeve 5. In use this plunger is used to squeeze a foam block 42 which is carried by a support 12a which has been surrounded by the sleeve 5 as described above. The user may then operate the plunger 6 repeatedly up and down to drive water and debris out of the foam block 42 safe in the knowledge that at least the bulk of this debris is prevented from passing into the rest of the filter and hence ultimately prevented from returning to the pond.

It will be appreciated that the present filter, in common with conventional tank filters, is arranged to be situated "out of pond" that is to say situated out of the water which it is to filter. Furthermore it will be appreciated that the present filter is a non-sealed filter where the internal parts of the filter and in particular the compartment housing the moving media is open to atmospheric pressure. It will also be noted that there is no mechanical filtration in the filter before the inlet water reaches the moving media. This means that the energy from the water due to it being pumped into the filter can drive the movement of the moving media, without energy being lost in mechanical filtration. Mechanical filtration is provided after the water has passed through the moving media - the second compartment housing mechanical filtering elements is downstream of the first compartment housing the moving bed. The third compartment housing a static biological filter is downstream of the second compartment. Because the first biological filter is a moving bed it is not prone to becoming clogged and the mechanical filtration protects the second biological filter from clogging.

## Claims

1. A pond filter assembly comprising a container (1) housing at least one filtering element and being arranged for receiving water which is to be filtered, the container having an inlet (2) for allowing water into the container and an outlet (3) for allowing water out of the container, the container comprising a plurality of compartments (11, 12, 13), housing respective different types of filtering element, **characterised in that** the inlet into the container is provided into a first (11) of the compartments, which first compartment houses moveable media (41) which in use form part of a moving bed biological filter, and a second of the compartments (12) houses at least one mechanical filtering element (42).

2. A pond filter assembly according to Claim 1 wherein another of the comportments (13) houses static media (43) which in use form part of a static biological filter.

3. A pond filter assembly according to Claim 1 or Claim 2 wherein the compartment (11) housing moveable media has a water holding portion (11a), the water holding portion having a first volume, the total volume of the compartment occupied by the moveable media being a second volume and the second volume being smaller than the first volume.

4. A pond filter assembly according to any preceding claim wherein the first compartment (11) is arranged to promote circulation of the media within the compartment.

5. A pond filter assembly according to any preceding claim wherein the inlet (2) into the container is arranged for feeding water into the container tangentially relative to the container wall in the region of the inlet.

6. A pond filter assembly according to any preceding claim in which the inlet to the container comprises a restriction (22).

7. A pond filter assembly according to any preceding claim wherein at least one air introduction venturi (22) is provided at the inlet into the container.

8. A pond filter assembly according to Claim 7 wherein the venturi (22) is arranged so that an axis of the venturi is generally tangential to the side wall of the container in the region of the venturi.

9. A pond filter assembly according to Claim 2 or any one of claims 3 to 8 when dependent upon Claim 2 wherein the outlet (3) is provided in the compartment (13) housing static filter media elements.

10. A pond filter assembly according to any preceding claim in which the first compartment (11) is open to atmosphere.

11. A pond filter assembly according to any preceding claim which is arranged to be situated out of the water which it is to filter.

## Patentansprüche

1. Teichalteranordnung, umfassend einen Behälter (1), in dem mindestens ein Filterelement untergebracht ist und der angeordnet ist, Wasser aufzunehmen, das es zu filtern gilt, wobei der Behälter einen Einlass (2), der Wasser in den Behälter hineinlässt, und einen Auslass (3) aufweist, der Wasser aus dem Behälter hinauslässt, wobei der Behälter mehrere Kammern (11, 12, 13) umfasst, in denen jeweils unterschiedliche Arten von Filterelementen untergebracht sind, **dadurch gekennzeichnet, dass** der Einlass in den Behälter in einer ersten (11) der Kammern vorgesehen ist, wobei in der ersten Kammer bewegliche Medien (41) untergebracht sind, die in Betrieb Teil eines Wirbelbett-Biofilters sind, und in einer zweiten der Kammern (12) mindestens ein mechanisches Filterelement (42) untergebracht ist,

2. Teichflteranordnung nach Anspruch 1, wobei in einer weiteren der Kammern (13) statische Medien (43) untergebracht sind, die in Betrieb Teil eines statischen Biofilters sind.

3. Teichfilteranordnung nach Anspruch 1 oder 2, wobei die Kammer (11), in der die beweglichen Medien untergebracht sind, einen Wasserrückhalteteil (11a) umfasst, wobei der Wasserrückhalteteil ein erstes Volumen umfasst, wobei das Gesamtvolumen der Kammer, das von den beweglichen Medien eingenommen wird, ein zweites Volumen ist, und wobei das zweite Volumen kleiner ist als das erste Volumen.

4. Teichfilteranordnung nach einem der vorhergehenden Ansprüche, wobei die erste Kammer (11) angeordnet ist, die Zirkulation der Medien innerhalb der Kammer zu fördern.

5. Teichfilteranordnung nach einem der vorhergehenden Ansprüche, wobei der Einlass (2) in den Behälter angeordnet ist, Wasser tangential in Bezug auf die Behälterwand im Bereich des Einlasses in den Behälter zuzuführen.

6. Teichfilteranordnung nach einem der vorhergehenden Ansprüche, wobei der Einlass in den Behälter eine Verengung (22) umfasst.

7. Teichfilteranordnung nach einem der vorhergehenden Ansprüche, wobei mindestens eine Venturi-Düse (22) für die Luftzufuhr am Einlass in den Behälter vorgesehen ist.

8. Teichfilteranordnung nach Anspruch 7, wobei die Venturi-Düse (22) so angeordnet ist, dass eine Achse der Venturi-Düse im Allgemeinen tangential zur Seitenwand des Behälters im Bereich der Ventun-Düse verläuft.

9. Teichfilteranordnung nach Anspruch 2 oder nach einem der Ansprüche 3 bis 8, wenn abhängig von Anspruch 2, wobei der Auslass (3) in der Kammer (13) vorgesehen ist, in der die statischen Filtermedienelemente untergebracht sind.

10. Teichfilteranordnung nach einem der vorhergehenden Ansprüche, wobei die erste Kammer (11) zur Atmosphäre offen ist.

11. Teichfilteranordnung nach einem der vorhergehenden Ansprüche, wobei sie angeordnet ist, außerhalb des Wassers platziert zu werden, das es zu filtern gilt.

## Revendications

1. Ensemble filtre à bassin comprenant un contenant (1) logeant au moins un élément filtrant et étant agencé pour recevoir de l'eau qui doit être filtrée, le contenant comportant une admission (2) permettant de faire entrer de l'eau dans le contenant et un refoulement (3) permettant de faire sortir de l'eau du contenant, le contenant comprenant une pluralité de compartiments (11, 12, 13) logeant différents types respectifs d'éléments filtrants, **caractérisé en ce que** l'admission dans le contenant est disposée dans un premier (11) des compartiments, lequel premier compartiment loge des milieux mobiles (41) qui en utilisation, forment une partie d'un filtre biologique à lit mobile, et un deuxième des compartiments (12) loge au moins un élément filtrant mécanique (42).

2. Ensemble filtre à bassin selon la revendication 1, dans lequel un autre des compartiments (13) loge des milieux statiques (43) qui en utilisation forment une partie d'un filtre biologique statique.

3. Ensemble filtre à bassin selon la revendication 1 ou la revendication 2, dans lequel le compartiment (11) logeant des milieux mobiles comporte une portion de retenue d'eau (11a), la portion de retenue d'eau ayant un premier volume, le volume total du compartiment occupé par les milieux mobiles étant un second volume et le second volume étant plus petit que le premier volume.

4. Ensemble filtre à bassin selon l'une quelconque des revendications précédentes, dans lequel le premier compartiment (11) est agencé pour favoriser la circulation des milieux dans le compartiment.

5. Ensemble filtre à bassin selon l'une quelconque des revendications précédentes, dans lequel l'admission (2) dans le contenant est agencée pour alimenter le contenant en eau de façon tangentielle par rapport à la paroi du contenant dans la région de l'admission.

6. Ensemble filtre à bassin selon l'une quelconque des revendications précédentes, dans lequel l'admission du contenant comprend un étranglement (22).

7. Ensemble filtre bassin selon l'une quelconque des revendications précédentes, dans lequel au moins un tube venturi d'introduction d'air (22) est disposé au niveau de l'admission dans le contenant.

8. Ensemble filtre à bassin selon la revendication 7, dans lequel le tube venturi (22) est agencé de sorte qu'un axe du tube venturi est généralement tangentiel à la paroi latérale du contenant dans la région du tube venturi.

9. Ensemble filtre à bassin selon la revendication 2 ou l'une quelconque des revendications 3 à 8 lorsqu'elles dépendent de la revendication 2, dans lequel le refoulement (3) est disposé dans le compartiment (13) logeant des éléments de milieu de filtre statique.

10. Ensemble filtre à bassin selon l'une quelconque des revendications précédentes, dans lequel le premier compartiment (11) est ouvert sur l'atmosphère.

11. Ensemble filtre à bassin selon l'une quelconque des revendications précédente, qui est agencé pour être situé hors de l'eau qu'il doit filtrer.
